# EUROPÄISCHE PATENTSCHRIFT

(11) **EP 2 190 665 B1**
(45) Veröffentlichungstag und Bekanntmachung des Hinweises auf die Patenterteilung: **24.07.2013**
(21) Anmeldenummer: 08735185.4
(22) Anmeldetag: 11.04.2008
(51) Int. Cl.: B32B 17/10, E06B 3/54, E04F 13/14

(54) **VERBUNDELEMENT UND VERFAHREN ZUR HERSTELLUNG SEINER BEFESTIGUNG**
COMPOSITE ELEMENT AND METHOD FOR THE PRODUCTION OF THE ATTACHMENT THEREOF
ÉLÉMENT STRATIFIÉ ET PROCÉDÉ POUR LA FABRICATION DE SA FIXATION

(30) Priorität: 11.04.2007 DE 102007017971; 19.11.2007 DE 202007016573 U
(43) Veröffentlichungstag der Anmeldung: 02.06.2010
(73) Patentinhaber: SWS Gesellschaft für Glasbaubeschläge mbH, 51545 Waldbröl (DE)
(72) Erfinder: DÖPPNER, Christoph, 36124 Lütter (DE); SCHNEIDER, Rolf, A., O., 72108 Rottenburg am Neckar (DE); ALBRECHT, Bernd, 31073 Delligsen (DE)
(74) Vertreter: Lippert, Stachow & Partner
(86) Internationale Anmeldenummer: PCT/EP2008/002894
(87) Internationale Veröffentlichungsnummer: WO 2008/125303

(56) Entgegenhaltungen:
- EP-A- 0 525 690
- WO-A-2004/106056
- WO-A-2005/061220
- WO-A1-2004/011755
- DE-A1- 3 523 140
- DE-A1- 3 908 983
- DE-U1-202004 005 639
- US-A- 3 919 022
- US-A- 4 355 077

## Beschreibung

Die Erfindung betrifft ein Verfahren zur Herstellung einer Befestigung eines Verbundelementes, das eine aus Glas bestehende Basisscheibe und eine Deckscheibe umfasst, wobei Basisscheibe und Deckscheibe mittels einer Zwischenschicht zusammengefügt sind, mit wenigstens einem Befestigungselement, das eine zwischen den Scheiben eingeschlossene Befestigungs-Einlage enthält. Ebenso betrifft die Erfindung ein entsprechendes Verbundelement.

Aus der EP 0 525 690 A2 ist ein Verbundelement für eine Glaskonstruktion bekannt geworden, bei dem Befestigungs-Einlagen in Form von Flachmaterialien in den Randbereich so eingebracht sind, dass sie seitlich herausstehen. Sie dienen als Halteelemente für das Verbundelement. Die Befestigungs-Einlagen sind in die Verbindungsschicht zwischen den Einzelglasscheiben eingelegt.

Aus der DE 100 090 966 A1 ist eine Mehrfachscheibe bekannt geworden, bei der der Zwischenraum zwischen zwei Scheiben mit einem Gießharz oder Polyurethan gefüllt wird. In diese Masse werden Körper, beispielsweise Diamanten, eingelegt.

Aus der EP 320674 ist eine Verbundglasscheibe bekannt geworden, die mittels Klebverbindungen um den Randbereich an einer Haltekonstruktion aus Haltestäben festgeklebt werden soll. Es wird dort allerdings eine Besorgnis vor einem Versagen der Klebverbindungen zum Ausdruck gebracht, weswegen zusätzlich Sicherungen aus Drahtgewebe oder -geflecht vorgesehen sein müssen.

Aus der EP 1 628 825 A bzw. WO 2004/106056 A1 ist ein Verfahren und eine Vorrichtung zur Herstellung eines Verbundelementes bekannt geworden, bei dem Befestigungs-Einlagen im Randbereich eingeschlossen sind, die als Haltelappen für das Verbundelement dienen können. Sie sind in die Zwischenschicht zwischen zwei Glasscheiben eingelegt und durch das unter Erwärmung und Vakuum vorgenommene Verbindungsverfahren festgelegt. Sie sind also zwischen zwei thermoplastisch verformten Bahnen der Zwischenschicht eingeformt. Dieses System bildet den Ausgangspunkt der vorliegenden Erfindung.

Die DE 20 2004 005 639 U1 zeigt einen Rahmen-Glas-Verbund mit einem aus Glas bestehenden Verbundelement, bei dem in einen Stapel von einzelnen Glasscheiben ein Gewebe- oder Kunststoffstreifen so eingeklebt ist, dass er seitlich aus dem Verbundelement herausragt. Dieser Streifen kann dann zur zusätzlichen Befestigung des Verbundelements an dem Rahmen dienen.

Aus der US 3,919,022 ist es bekannt, bei einem Verbundelement aus zwei Glasscheiben im Randbereich Streifen aus Glasfasern anzukleben, und zwar sowohl in einem Zwischenraum zwischen den beiden Glasscheiben als auch an deren Außenseiten. Diese am Rand nach außen geführten Streifen dienen der Befestigung des Verbundelementes.

Die WO 2004/011755 A1 beschreibt ein weiteres Verbundelement mit einer Zwischenschicht, die eine Klebewirkung hat bzw. die sowohl eine Basisscheibe mit einer Deckscheibe verbindet als auch eine Befestigungs-Einlage einbettet. Dabei besteht diese Zwischenschicht aus einer thermoplastischen Folie.

Die DE 39 08 983 A1 beschreibt ein Verbundelement mit Basisscheibe und Deckscheibe, die durch eine Zwischenschicht aus mehreren aufeinander liegenden Folien miteinander verbunden sind. Die Folien sind thermoplastische Folien und verschmelzen durch eine Wärme-DruckBehandlung derart miteinander, dass eine homogene Zwischenschicht entsteht, die eine Klebewirkung aufweist. In diese Zwischenschicht ist eine Befestigungs-Einlage in Form eines Gewindeteils mit einem Kragen eingebettet.

### Aufgabe und Lösung

Aufgabe der Erfindung ist es, ein eingangs genanntes Verfahren sowie ein entsprechendes Verbundelement zu schaffen um die Befestigungsmöglichkeiten und die Sicherheit eines Verbundelementes der vorher erwähnten Art, insbesondere unter extremen Betriebsbedingungen, zu verbessern.

Diese Aufgabe wird durch ein Verfahren mit den Merkmalen des Anspruchs 1 und ein Verbundelement mit den Merkmalen der Ansprüche 8 gelöst. Vorteilhafte sowie bevorzugte Ausgestaltungen der Erfindung sind Gegenstand der weiteren Ansprüche und werden im Folgenden näher erläutert. Manche der nachfolgend angeführten Merkmale werden nur für das Verfahren oder nur für das Verbundelement erläutert. Sie sollen jedoch unabhängig davon sowohl für das Verfahren als auch für das Verbundelement gelten können. Der Wortlaut der Ansprüche wird durch ausdrückliche Bezugnahme zum Inhalt der Beschreibung gemacht. Des weiteren wird durch ausdrückliche Bezugnahme der Inhalt der beiden deutschen Prioritätsanmeldungen, DE 102007017971.7 vom 11. April 2007 und DE 202007016573.0 vom 19. November 2007, zum Inhalt der vorliegenden Anmeldung gemacht.

Erfindungsgemäß wird also die Befestigungs-Einlage, die vorzugsweise metallisch, zumindest aber bezüglich ihrer Festigkeits-Eigenschaften metallartig ist, mittels eines Klebers auf die Basisscheibe geklebt. Danach werden die Zwischenschicht und die Deckschicht aufgebracht und beide werden, wenn bevorzugt die Zwischenschicht thermoplastisch ist, durch eine Wärme- und Druckbehandlung, vorzugsweise unter Vakuum, zu dem Verbundelement verbunden. Unter metallartig werden vor allem Kunststoffe, insbesondere auch Verbund-Werkstoffe, verstanden, die anstelle Metall für die Befestigungs-Einlage verwendet werden können.

Die Zwischenschicht wird bevorzugt in Form wenigstens einer Folienbahn auf die bereits mit der Befestigungs-Einlage verklebte Basisscheibe aufgebracht und nach Überdeckung mit der Deckscheibe durch Erwärmung und Druckaufbringung zu einer beide Scheiben zu dem Verbundelement verbindenden Schicht geformt. Auf diese Weise ist die Befestigungs-Einlage einseitig mit der Basisscheibe durch eine aushärtbare und bevorzugt innerhalb der üblichen Temperaturgrenzen thermisch beständigen Kleberschicht verbunden, während ihre andere Seite durch Teileinbettung in der Zwischenschicht mit der Deckscheibe in Verbindung steht.

Es hat sich gezeigt, dass diese für den Fachmann ungewöhnliche Teilung der Verbindungsmethoden auf beiden Seiten der Befestigungs-Einlage sowohl Herstellungsprobleme als auch Sicherheitsprobleme bei verschärften Umweltbedingungen löst. Die Befestigungs-Einlagen sind bei einer Ausführungsform aus Metallblech bestehende Lappen oder Ohren, mittels derer die Verbundelemente an anderen Strukturen, beispielsweise Bauwerken, angebracht werden, zum Beispiel als Dachelemente, Brüstungen, Fassadenverkleidungen o. dgl.. Dies geschah üblicherweise mittels Rahmen oder durch Halteelemente, die in Bohrungen des Verbundelementes eingriffen. Bei den eingangs erwähnten Konstruktionen sind die Befestigungs-Einlagen in die Zwischenschicht eingebettet, und zwar in deren Randbereich, so dass sie seitlich über die Kante des Verbundelementes hinausragen. Diese Konstruktion erscheint sinnvoll und ausreichend, da die für die Verbindung der beiden Scheiben sorgende Zwischenschicht, insbesondere, wenn das Verfahren nach der EP 1 628 825 A angewendet wird, die Befestigungs-Einlage hervorragend einschließt und integriert.

Wenn allerdings das Verbundelement erhöhten thermischen Beanspruchungen ausgesetzt wird, beispielsweise im Außenbereich von Bauwerken unter direkter Sonneneinstrahlung, insbesondere, wenn eingefärbte Glasscheiben verwendet werden, können die Temperaturen so ansteigen, dass unter höheren Belastungen sich die Befestigungs-Einlagen in der Zwischenschicht verschieben. Dies liegt daran, dass die Befestigungs-Einlagen, wenn sie als Halteelemente verwendet werden, die zum Beispiel von dem relativ hohen Gewicht des Verbundelementes herrührenden Kräfte in einem geringen Flächenbereich, das heißt nahezu punktförmig, aufbringen. Man hatte bisher angenommen, dass so etwas nicht auftreten könne, da die thermoplastische Zwischenschicht, vorzugsweise eine Folie aus PVB (Polyvinyl-Butyral), Erweichungstemperaturen im Bereich von 90°C hat, bei denen der Werkstoff teigig wird, während die Schmelztemperaturen über 120°C liegen. Zusammen mit der Quasi-Punktlast an den Kraftangriffspunkten hat sich aber herausgestellt, dass sich auch unterhalb der Erweichungstemperatur trotz der beidseitig flächigen Einbettung schleichende Kriecherscheinungen einstellen können, die dazu führen, dass sich die vollflächige Verbindung teilweise lösen kann und Spalte entstehen können. In diese kann dann wiederum Wasser eindringen, das später bei Frost eine weitere Lockerung bewirkt. Der Kleber, beispielsweise ein modifizierter Akrylatkleber, hat eine thermische Beständigkeit im Dauereinsatz im Bereich von 120°C und kurzzeitig auch bis 150°C. Ein solcher Kleber wird von der Firma DELO Industrieklebstoffe in D-86899 Landsberg unter der Bezeichnung DELO-Photobond 4468 hergestellt.

Die vor der Verbindung der beiden Scheiben hergestellte Verklebung kann beispielsweise durch Ultraviolettlampen ausgehärtet werden, nämlich durch die Basisscheibe hindurch. Damit sind die Befestigungs-Einlagen bereits in ihrer genauen Position fixiert und können sich bei dem Aufbringen der Folie und der unter Erwärmung und Druck vorgenommenen Verbindung der beiden Scheiben, die vorzugsweise im Vakuum geschieht, nicht mehr verschieben. Es brauchen also keine besonderen Maßnahmen vorgenommen zu werden, um die Befestigungs-Einlagen während dieser Verbindungsphase in Position zu halten, da sich gerade in ihrem Bereich durch die starke Verdrängung des thermoplastischen Materials seitliche Verschiebekräfte ergeben könnten.

Es zeigt sich also, dass die Erfindung einen doppelten Vorteil bietet, nämlich einerseits die Vorteile bei der Herstellung durch die Vorfixierung der Befestigungs-Einlagen mittels des Klebers und andererseits im Dauerbetrieb eine unter Betriebsbedingungen thermisch unanfällige und damit auf Dauer sichere Verbindung, auch bei hoher Punktbelastung unter erhöhten Temperaturbedingungen. Der Vorteil der Vorfixierung wird auch bei anderen, z.B. vergossenen, Verbundscheiben erzielt.

Das Zusammenfügen der beiden Scheiben mittels der thermoplastischen Zwischenschicht geschieht bei der Erfindung vorzugsweise nach dem gleichen Verfahren, wie es in der EP 1 628 825 A beschrieben ist, deren Inhalt ausdrücklich mit seiner gesamten Offenbarung in die vorliegende Anmeldung einbezogen wird.

Es ist auch hier möglich, bei der Verwendung mehrerer Folienbahnen, die zusammen die Zwischenschicht bilden, eine oder mehrere dieser Bahnen an den Stellen der Befestigungs-Einlage mit Ausnehmungen zu versehen, um das dort zu verdrängende Material in Grenzen zu halten. In jedem Fall sollte aber noch eine gewisse Dicke der Zwischenschicht zwischen der Befestigungs-Einlage und der Deckscheibe erhalten sein, um die Befestigungs-Einlage auch an dieser Fläche und den Seitenkanten feuchtigkeitsdicht einzuschließen.

Bei der Erfindung ist die Befestigungs-Einlage mit einem Funktionselement, z.B. einem zur Befestigung dienenden Schraubbolzen oder einem Zapfen mit Innen- und/oder Außengewinde, verbunden, das durch einen Durchbruch in der Deckscheibe ragt. Der Raum zwischen Durchbruch und Funktionselement kann mit einer Vergussmasse oder einer Dichtung ausgefüllt werden, die nach der Fertigstellung des Verbundelementes aufgebracht wird. Das ergibt den Vorteil, dass die Basisscheibe undurchbrochen bleiben kann. Wenn das Verbundelement also als Fassaden-Platte eingesetzt wird, dann ergeben sich keine Durchbrüche, in die Feuchtigkeit eindringen kann. Auch optisch entspricht in die ungestörte Außenfläche dem Charakter einer aus Glasfläche. Besonders vorteilhaft ist dabei, dass erfindungsgemäß durch die Überlappung zwischen der Befestigungs-Einlage und der Deckscheibe im Randbereich des Durchbruchs ein Formschluss in allen Richtungen zwischen dem Funktionselement und dem Verbundelement entsteht, so dass selbst in dem unwahrscheinlichen Fall, dass sich die Einlage innerhalb des Verbundelementes verschieben sollte, eine Absturzsicherung aufrechterhalten bleibt. Dabei ist es vorteilhaft, wenn durch die Vergussmasse, eine Dichtung oder eine andere Abpufferung zwischen dem Funktionselement und der Durchbruchswandung sichergestellt wird, dass kein ritzender Kontakt zustande kommt, der eine Rissbildung in der Deckscheibe erzeugen könnte. Es ist ferner vorteilhaft, dass dadurch die Befestigungspunkte der Verbundelemente an nahezu beliebige Stelle, auch im Abstand vom Außenrand, vorgesehen werden können, was eine größere Freiheit für die Tragstruktur, an der die Verbundelemente anzubringen sind, ermöglicht und diese optisch nach außen abdeckt. Es ist auch möglich, andere Funktionselemente, wie Leuchten o. dgl. direkt oder mittelbar an der Befestigungs-Einlage vorzusehen. Ferner kann die Befestigungs-Einlage auch als Verstärkung im Bereich einer Durchgangsbohrung durch das Verbundelement dienen.

Es wird also bei einer bevorzugten Ausführung zur Herstellung eines Verbundelementes, das wenigstens eine Basisscheibe aus Glas und eine Deckscheibe aus Glas oder anderen Materialien sowie eine thermoplastische Zwischenschicht aus Folienbahnen und eine als Befestigungslappen dienende metallische Befestigungs-Einlage aufweist, zuerst die Befestigungs-Einlage mittels eines Klebers auf die Basisscheibe geklebt. Die so vorbereitete Basisscheibe wird mit einer oder mehreren die Zwischenschicht bildenden Folienbahnen aus thermoplastischem Kunststoffmaterial belegt und nach Aufbringung der Deckscheibe unter Pressdruck auf die Erweichungstemperatur der Zwischenschicht gebracht, sodass eine Verbundscheibe entsteht. Durch eine Evakuierung des Behandlungsraums wird ein luftblasenfreier Verbund erzeugt. Die Befestigungs-Einlage ist also dabei einseitig mit einer aushärtbaren und auf der anderen Seite mit einer thermoplastischen Schicht mit je einer der Scheiben verbunden und ist somit frei von lastbedingten Verschiebungen unter erhöhten Temperaturbedingungen. Die Aufgabe der Erfindung wird auch bei der Erfindung gelöst, bei der die Befestigungs-Einlage im Bereich eines Durchbruchs der Deckscheibe diese überlappend eingeschlossen ist und so eine mit dem Verbundelement formschlüssige und absturzsichere Punkt-Befestigung an beliebigen Stellen des Verbundelementes ermöglicht. Trotz des Erhalts einer undurchbrochenen Basisscheibe bleibt ein sichernder Formschluss erhalten.

Vorteilhaft ist allgemein die Einlage nur in einem Teilbereich des Verbundelements vorgesehen, also nicht über das gesamte Verbundelement gehend. Es können auch mehrere solcher Einlagen verteilt an dem Verbundelement vorgesehen sein. Des weiteren ist es von Vorteil, wenn die Einlage zur besseren Verklebung eine gewisse Fläche aufweist, wenngleich diese Fläche klein bzw. sehr klein sein sollte im Vergleich zu derjenigen des Verbundelements.

Die vorstehenden und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können. Die Unterteilung der Anmeldung in einzelne Abschnitte sowie Zwischenüberschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im Folgenden näher erläutert. Es zeigen:
- Fig. 1: eine perspektivische, in einzelnen Lagen auseinandergezogene Darstellung eines Verbundelementes mit einer Befestigungs-Einlage,
- Fig. 2: einen Querschnitt durch einen Teil eines Verbundelementes mit Befestigungs-Einlage,
- Fig. 3: eine erläuternde Skizze zum Herstellungsverfahren und
- Fig. 4 und 5: Schnitte durch Details weiterer bevorzugter Ausführungen von Verbundelementen,
- Fig. 6: einen Querschnitt durch einen Teil eines Verbundelementes mit Befestigungs-Einlage gemäß einer ersten Ausführungsform,
- Fig. 7: eine Draufsicht auf den Teil eines Verbundelementes gemäß Fig. 6,
- Fig. 8: einen Querschnitt durch einen Teil eines Verbundelementes mit Befestigungs-Einlage,
- Fig. 9: eine Draufsicht auf einen Teil eines Verbundelementes,
- Fig. 10: einen Querschnitt durch einen Teil eines Verbundelementes gemäß Fig. 9, wobei der Befestigungspunkt als verschiebbares (Los-)Lager gestaltet ist,
- Fig. 11: eine Draufsicht auf einen Teil eines Verbundelementes,
- Fig. 12: einen Querschnitt durch den in Fig. 11 gezeigten Teil eines Verbundelementes mit einem Schwenklager,
- Fig. 13: einen Querschnitt durch eine Abdeckscheibe ähnlich Fig. 12,
- Fig. 14: einen Querschnitt durch einen Teil eines Verbundelementes gemäß Fig. 10.

### Detaillierte Beschreibung der Ausführungsbeispiele

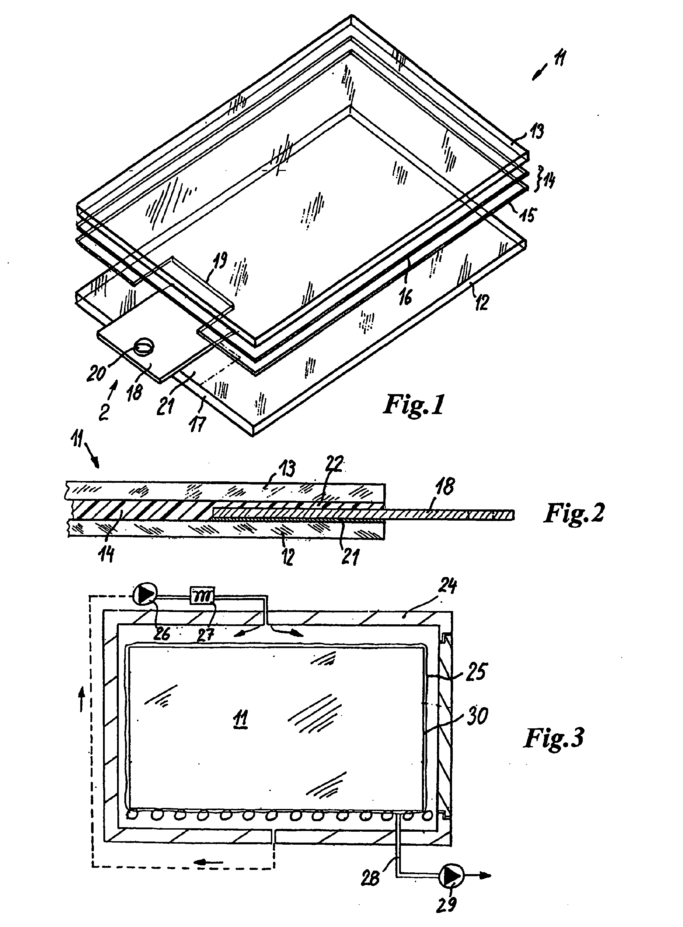

Fig. 1 zeigt ein Glas-Verbundelement 11 in auseinandergezogener (Explosiv-)Darstellung. Es weist eine Basisscheibe oder -platte 12 und eine Deckscheibe bzw. -platte 13 auf. Bei der Basisscheibe handelt es sich um eine Scheibe aus Glas oder glasartigem Material. Auch die Deckscheibe ist meist aus Glas. Hier können aber auch andere Materialien aus natürlichen oder künstlichen Mineralien oder anderen Werkstoffen verwendet werden, beispielsweise eine Marmorplatte. Die Scheiben 12, 13 sollen durch eine Zwischenschicht 14 miteinander verbunden werden, die im gezeigten Beispiel aus zwei kräftigen Folienbahnen 15, 16, vorzugsweise aus PVB, aufgebaut ist.

Im Bereich einer Kante 17 ist eine Befestigungs-Einlage 18 zu erkennen, die zu einem Befestigungselement 2 gehört und aus einem metallischen Werkstoff, beispielsweise einem Edelstahlblech, besteht und als Halterung für das Verbundelement zur Montage an anderen Bauteilen dienen soll. Es sind aber auch zu anderen Zwecken dienende Befestigungs-Einlagen auf die im Folgenden beschriebene Weise anzubringen. Es ist auch möglich, die Befestigungs-Einlagen aus anderen Materialien herzustellen, die für eine Befestigung geeignete Eigenschaften haben, z.B. Kohlefaser-Verbundwerkstoffe oder besondere Keramiken. Üblicherweise sind mehrere, beispielsweise vier dieser Befestigungs-Einlagen im Bereich der vier Ecken des Verbundelementes vorgesehen. Die Befestigungs-Einlage reicht über die Kante 17 hinaus, jedoch auch zwischen die beiden Scheiben, das heißt in das Verbundelement hinein, und zwar im Bereich der Zwischenschicht 14. Es ist zu erkennen, dass eine der beiden Folienbahnen 15 im Bereich der Befestigungs-Einlage 18 eine Aussparung 19 aufweist, die der Form des Teils der Befestigungs-Einlage angepasst ist, die in das Verbundelement hineinragt. Die Befestigungs-Einlage ist im dargestellten Beispiel mit einem Befestigungsloch 20 vorgesehen, das beispielsweise zur Aufnahme einer Schraube dient, mit der das Verbundelement 11 mit einer anderen, z.B. einer TragStruktur befestigt werden kann.

Fig. 2 zeigt den Fertig-Zustand eines Teils des Verbundelementes. Es ist zu erkennen, dass die Befestigungs-Einlage 18 auf der Basisplatte 12 mittels einer Kleberschicht 21 befestigt ist. Deren Bereich ist auch in Fig. 1 strichpunktiert angedeutet. Bei dem Kleber handelt es sich um einen Glas/Metallkleber auf Akrylatbasis, der durch Licht, insbesondere ultraviolettes Licht, aushärtbar ist. Bei der Herstellung des Verbundelementes wird zuerst die Verklebung der Befestigungs-Einlage mit der Basisplatte vorgenommen. Hierzu werden die Befestigungs-Einlagen, zum Beispiel in der Nähe der vier Ecken der Basisplatte, ausgerichtet und nach klebergerechter Vorbehandlung aufgeklebt. Danach wird die Kleberschicht 21 mittels UV-Licht ausgehärtet, was durch die aus Glas bestehende Basisplatte hindurch möglich ist.

Danach wird die Zusammenfügung der Scheiben 12, 13 und der Zwischenlage durch die Zwischenschicht in Angriff genommen. Zu diesem Zweck werden die Folienbahnen 15, 16 auf die Basisplatte gelegt, wobei die untere Bahn 15 wegen des Ausschnitts 19 um die Befestigungs-Einlage herum liegt, während die obere Folienbahn 16 die gesamte Fläche der Basisscheibe 12 abdeckt. Die Folienbahnen 15, 16 bestehen aus PVB (Polyvinyl-Butyral), einem Kunststoffmaterial, das bei etwa 90°C in den teigigen Zustand übergeht und auch nach der Fertigstellung thermoplastisch bleibt. Danach wird die Deckplatte 13 aufgelegt und der Verbindungsvorgang der Scheiben zu dem Verbundelement eingeleitet. Die Folienbahnen 15, 16 sollten in ihrer Gesamtdicke um einiges stärker sein als die Dicke der Befestigungs-Einlage zuzüglich der Kleberschicht 21. Bei einer bevorzugten Ausführung kann die Befestigungs-Einlage aus einem zwischen 0,5 bis 1,5mm, z. B. etwa 1 mm dicken Blech bestehen, die Kleberschicht zwischen 0,1 und 0,3mm, z. B. etwa 0,2mm dick sein und die Folienbahnen, von denen je nach dem Ausgangsmaterial zahlreiche, zum Beispiel fünf, übereinander gelegt werden, eine addierte Gesamtdicke zwischen 1,5 und 3mm, z. B. von ca. 2 mm aufweisen. Dementsprechend bleiben in dem Bereich 22 zwischen der Befestigungs-Einlage und der Deckschicht etwa 0,7mm. Das restliche Material wird nach den Seiten und teilweise nach außen verdrängt, wo es entfernt werden kann.

Diese Verformung der Zwischenschicht 14 wird in einer Vorrichtung vorgenommen, die in Fig. 3 skizziert ist. Ein Autoklav 24 besteht im Wesentlichen aus einer druck- und temperaturbeständigen Kammer, die so bemessen ist, dass mehrere Verbundelemente 11 hochkant eingebracht werden können. Der Autoklav 24 besitzt eine Druckluftpumpe 26 zum Erzeugen von Druckluft und eine Heizeinrichtung 27 zur Erwärmung der Druckluft und zur Einstellung einer Behandlungstemperatur. Diese liegt im Bereich zwischen 120°C und 150°C, der Erweichungs- bzw. Schmelztemperatur der Folienbahnen 15, 16. Es strömt heiße Luft unter Überdruck ein, der auf einen evakuierbaren Raum 30 innerhalb eines flexiblen Sackes 25 einwirkt, in den mehrere zu behandelnde und entsprechend vorbereitete Verbundelemente dicht eingeschlossen sind. Der flexible Sack 25 kann beispielsweise aus einem wärmebeständigen Kunststoffmaterial hergestellt sein. An den Sack 25 ist eine Absaugleitung 28 angeschlossen, die mit einer Vakuumpumpe 29 verbunden ist. Darüber wird das Innere des Sackes 25, also des Raums 30, in dem sich die entstehenden Verbundelemente 11 befinden, evakuiert. Durch die Evakuierung des Sacks schmiegt sich dessen Hülle an das herzustellende Verbundelement 11 an und presst dieses, bzw. den Stapel mehrerer Verbundelemente in Verbindung mit dem äußeren Überdruck mit einem Pressdruck zusammen, der im Bereich von 12 bis 18 bar liegen kann. Dieser Gesamtpressdruck, der auf das herzustellende Verbundelement 11 wirkt, setzt sich aus dem Pressdruck zusammen, der durch das unterdruckbedingte Anschmiegen des Sackes entsteht und dem Zusatzpressdruck der durch die Druckluft im Autoklaven außerhalb des Sacks entsteht. Durch die Druckluftpumpe 26, die wiederum aus den Autoklaven ansaugt, und die in diesen Strang eingeschaltete Heizung 27 wird eine Umluftführung geschaffen, die die Behandlungstemperatur auf die beschriebenen Werte bringt und dort hält.

Die auf die Behandlungstemperatur gebrachte thermoplastische Folie der Zwischenschicht beginnt zu fließen, so dass sie unter dem ausgeübten Pressdruck gleichmäßig an den Innenseiten der Scheiben 12, 13 anliegt. Im Bereich der Befestigungs-Einlage 18 wird das überschüssige Material im Bereich 22 verdrängt, sodass die Befestigungs-Einlage nach der Behandlung auf der einen Seite über die Kleberschicht 21 und auf der anderen Seite über die Zwischenschicht 14 mit den beiden Scheiben verbunden ist. Eine detaillierte Beschreibung des Verfahrens ist beispielsweise auch der EP 1 628 825 A entnehmbar, auf deren Inhalt hier zum Zweck der Offenbarung Bezug genommen wird.

Es hat sich gezeigt, dass durch die kombinierte Druckaufbringung, insbesondere aber durch den relativen Unterdruck bzw. die Evakuierung des direkten Behandlungsraums, eine vollständig luftblasenfreie Verbindung erzielt wird.

Nach entsprechender Abkühlung und Druckentlastung werden die Verbundelemente entnommen und sind, gegebenenfalls nach Randbeschneidung der Zwischenschicht 14, ohne zusätzliche Befestigungsbohrungen oder Rahmen einbaufertig. Es wird also damit ein Verfahren geschaffen, das sowohl in der Herstellung als auch in der Betriebssicherheit Vorteile für das hergestellte Verbundelement schafft. Dadurch, dass auch unter höherer thermischer und mechanischer Belastung Kriechen, das heißt eine Positionsveränderung oder Spaltbildung im Bereich der Befestigungs-Einlagen vermieden wird, können erhöhte Kriterien der Sicherheitsvorschriften erfüllt werden.

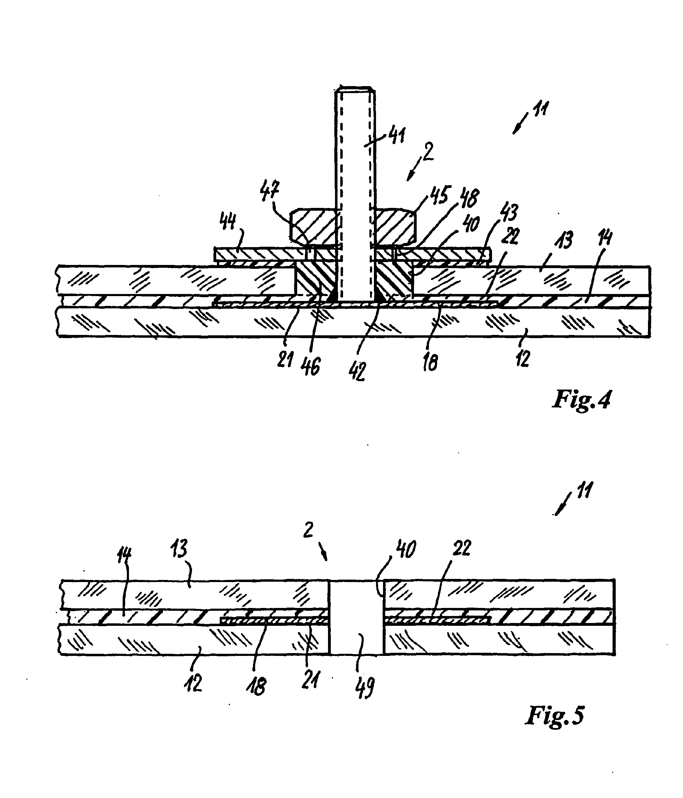

Fig. 4 zeigt eine Ausführung, bei der die Deckscheibe 13 im Bereich der aufgeklebten Befestigungs-Einlage 18 des Befestigungselementes 2 einen Durchbruch 40 aufweist. An der von der Kleberschicht 21 und abgewandten Seite der Befestigungs-Einlage 18 ist ein Funktionselement 41 in Form eines Befestigungsbolzens zum Beispiel durch Punktschweißung aufgebracht. Es ragt zentral durch den Durchbruch 40 nach außen. Das Herstellungsverfahren und die weiteren Verfahrensschritte können gleich sein wie bei den vorbeschriebenen Ausführungen. Später kann der Durchbruch 40 durch eine Vergussmasse 46 ausgefüllt werden. Zu diesem Zweck wird auf die Außenseite der Deckscheibe 13 eine Abdeckscheibe 44 mit untergelegter Ringdichtung 43 aus Gummi aufgelegt. Sie könnte ein Gewinde haben und so die Gummischeibe an die Deckscheibe andrücken. Danach kann durch eine Öffnung 47 in der Abdeckscheibe die Vergussmasse 46 eingebracht werden, wobei die eingeschlossene Luft durch eine Entlüftungsbohrung 48 austreten kann. Später kann eine Mutter 45, die auf den Befestigungsbolzen 41 geschraubt ist, die Abdeckscheibe 44 sichern.

Bei dieser Ausführung kann also mit den gleichen Herstellungs- und Funktionsvorteilen ein Befestigungselement auch mit Abstand vom Randbereich vorgesehen werden. Es ist auch möglich, als Funktionselement 41, wie im folgenden gezeigt, statt eines Befestigungsbolzens eine Gewindemutter auf die Befestigungs-Einlage 18 aufzubringen, in die dann eine Befestigungsschraube eingreifen kann. Auch ist es möglich, andere Funktionselemente, die nicht oder nicht nur der Befestigung des Verbundelementes an anderen Strukturen dienen, sondern selbst an dem Verbundelement 11 befestigt werden sollen, auf diese Weise anzubringen.

Fig. 5 zeigt eine Ausführung, bei der fluchtend mit dem Durchbruch 40 in der Deckscheibe 13 ein Durchbruch 49 durch das gesamte Verbundelement 11 vorgesehen ist, also auch in der Basisscheibe 12. Auch die Befestigungs-Einlage 18 hat einen entsprechenden Durchbruch. In diesem Falle dient die Befestigungs-Einlage zur Verstärkung eines Befestigungs-Bereiches, wenn zum Beispiel ein Befestigungsbolzen durch den Durchbruch 49 ragt.

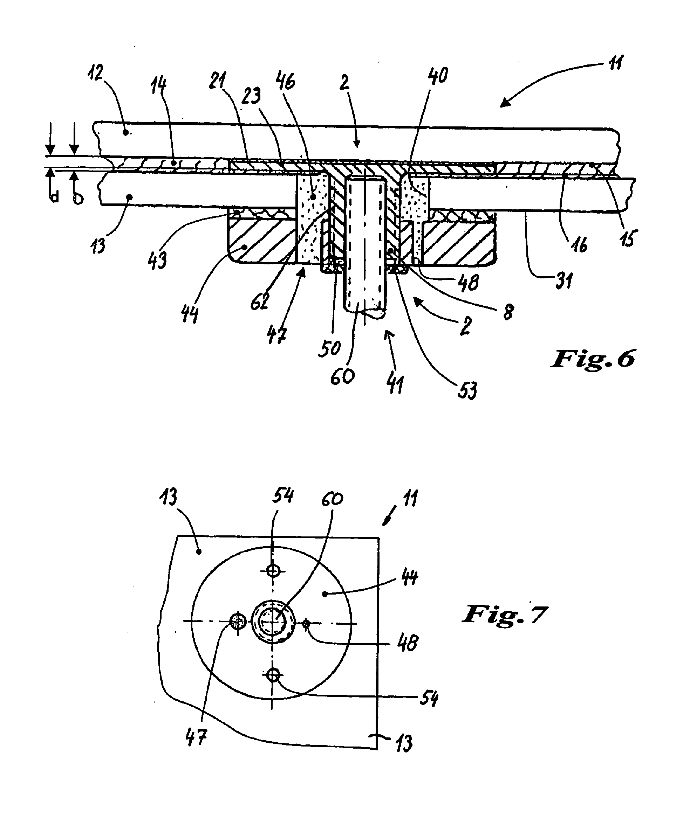

Fig. 6 zeigt schematisch einen Teil einer anderen Ausführung des Glas-Verbundelements 11 in einer Querschnittsansicht. Bei den Basis- und Deckscheiben 12, 13 handelt es sich beispielsweise um Sicherheitsglas, ein Flachglas, ein thermisch zu stärkendes Glas (TVG-Glas), Einscheibensicherheitsglas, ein Spiegelglas oder dergleichen. Das Verbundelement 11 kann an einer Fassaden-Unterkonstruktion angebracht werden oder als eine Ausfachung eines Geländers, für Vordächer, Glasdächer, im Messe- und Ladenbau, in der Innenarchitektur, im Möbelbau, als Solarpaneel, beispielsweise als Teil eines Solardachs o.dgl. verwendet werden.

Das Verbundelement 11 nach Fig. 6 unterscheidet sich von dem nach Fig. 4 dadurch, dass an den plattenförmigen Bereich der Befestigungs-einlage 18 ein das Funktionselement 41 tragender Zapfen 8 mit einem Innen- und Außengewinde 61, 62 anschließt. In das Innengewinde 61 wird das Funktionselement 41 in Form eines Gewindebolzens 60 eingeschraubt, über das das Befestigungselement 2 mit einer entsprechenden, in Fig. 1 nicht dargestellten Tragstruktur verbunden werden kann. Die Schraubverbindung kann dabei mittels einer Flüssigsicherung gesichert werden. Ein durch das Befestigungselement 2 geschaffener Befestigungspunkt an dem Verbundelement 11 ist dabei ähnlich zu herkömmlichen Punkthaltern verwendbar, welche beispielsweise an den Ecken eines plattenförmigen Verbundelements 11 angebracht werden. Im Unterschied zu herkömmlichen Punkthaltern werden jedoch nicht beide Scheiben 12, 13 durchbohrt, sondern die Basisscheibe 12 weist im Bereich des Befestigungselements 2 eine nicht-unterbrochene oder durchbruchsfreie Oberfläche auf. Eine Fläche der Befestigungs-Einlage 18 ist dabei derart gestaltet, dass sie die Deckscheibe 13 am Randbereich des Durchbruchs 40 überlappt. Der Zapfen 8 kann mit der die Einlage verbunden oder mit dieser einstückig geformt sein. Der plattenförmige Bereich 23 ist als Scheibe gestaltet.

Nach einem Anbringen der Einlage 20 an der Basisscheibe 12 werden die Basisscheibe 12 und die Deckscheibe 13 durch die Zwischenschicht 14 verbunden. In dem dargestellten Ausführungsbeispiel umfasst die Zwischenschicht zwei Folienbahnen 15, 16. Eine erste Folienbahn 15 wird dabei direkt auf der Basisscheibe 12 aufgebracht und hat einen Ausschnitt für die Einlage 18. Die zweite Folienbahn 16 weist in dem dargestellten Ausführungsbeispiel ebenfalls einen Ausschnitt auf, durch welche der Zapfen 8 geführt werden kann. Die Stärke der Folienbahnen 15, 16 ist vorzugsweise derart gewählt, dass die Gesamtdicke D der Zwischenschicht größer ist als eine Dicke d der Einlage 18 und der Klebeschicht 21.

Auf einer Außenseite 31 der Deckscheibe 13 ist ein Abdeckscheibe 44 angebracht. Die Abdeckscheibe 44 weist eine Aussparung 50 mit einem Innengewinde auf, in das der Gewindebolzen 60 als Funktionselement 41 einschraubbar ist. Die Abdeckscheibe 44 ist in dem dargestellten Ausführungsbeispiel über ein in der Aussparung -50 vorgesehenes Innengewinde auf das Außengewinde des Zapfen 8 geschraubt. Zwischen der Abdeckscheibe 44 und der Deckscheibe 13 ist eine Dichtung als Ringdichtung 43 angebracht, vorteilhaft eine EPDM-Dichtung. Die Abdeckscheibe 44 kann bereits vor einer Behandlung des Verbundelements 11 in dem Autoklav an dem Verbundelement 11 angebracht sein. Der Gewindebolzen 60 ist dabei vorzugsweise noch nicht in dem Zapfen 8 eingedreht. Die Abdeckscheibe 44 schließt vorzugsweise bündig mit dem Zapfen 8 ab, sodass eine möglichst glatte Oberfläche geschaffen wird. Dadurch verringert sich die Gefahr, dass ein Sack beschädigt wird, in welchem das Verbundelement 11 in dem Autoklav angeordnet ist.

Fig. 7 zeigt die Abdeckscheibe 44 mit den Öffnungen 47, 48 auf, wobei die größere Öffnung 47 als Zuführöffnung für die Vergussmasse 46, beispielsweise einen Injektionsmörtel, und die kleinere Öffnung 48 als Entlüftungsbohrung dient. Nach der Verfüllung des Hohlraums mit der Vergussmasse 46 sollte die Abdeckscheibe 44 nicht mehr abgeschraubt werden. Auf der Abdeckscheibe 44 kann, wie dargestellt, ein weiteres Dichtungselement 53 angeordnet sein. Der Gewindebolzen 60 kann erst nach dem Verfüllen, beispielsweise erst kurz vor oder bei einer Montage des Verbundelements 11, als Funktionselement 41 in den Zapfen 8 eingesetzt werden. Anstelle der Verschraubung gemäß Fig. 1 ist auch eine Steckverbindung denkbar. Insbesondere durch eine Steckverbindung unter Spiel lassen sich beispielsweise Fertigungstoleranzen bei der Montage ausgleichen. Die Steckverbindung kann mittels eines aushärtbaren Klebers fixiert werden, wobei eine Fixierung der Steckverbindung nach Positionierung des Verbundelements in einer gewünschten Position relativ zu der Tragstruktur erfolgen kann.

Es ist weiter denkbar, anstelle eines Gewindebolzens 60 andere Funktionselemente, z. B. elektrische Verbraucher, beispielsweise LED, Lautsprecher, Kameras etc., über den Zapfen 8 mit dem Verbundelement 11 zu verbinden. Dabei kann eine oder beide Glasscheiben und/oder die Zwischenschicht 14 zumindest teilweise elektrisch leitend gestaltet oder vorzugsweise durchscheinend leitend beschichtet sein. Weiter können auf den Scheiben 12, 13 Leiter vorgesehen sein, welche beispielsweise durch entsprechende Ausnehmungen an geeignete Positionen geführt werden. Das Verbundelement 11 ist beispielsweise Teil einer Überkopfverglasung, wobei aufgrund der erfindungsgemäßen Anbringung des Befestigungselements 2 unter Verzicht auf eine Durchbrechung beider Scheiben 12, 13 das Verbundelement 11 nicht oder nur unwesentlich geschwächt ist und durch die Überlappung Befestigungseinlage/Deckscheibe absturzsicher ist.

Fig. 7 zeigt, dass die Abdeckscheibe 44 in dem dargestellten Ausführungsbeispiel, ebenso wie der plattenförmige Bereich 23 der Einlage 18 eine kreisförmige und gleich große Grundfläche hat, so dass die Abdeckscheibe 44 die Einlage 20 optisch abdeckt. Die Abdeckscheibe 44 hat zwei Einsenkungen 54, die zur Ansetzung eines nicht dargestellten Stiftschlüssels dienen, durch welchen die Abdeckscheibe 44 auf den Zapfen 8 auf einfache Weise aufschraubbar ist.

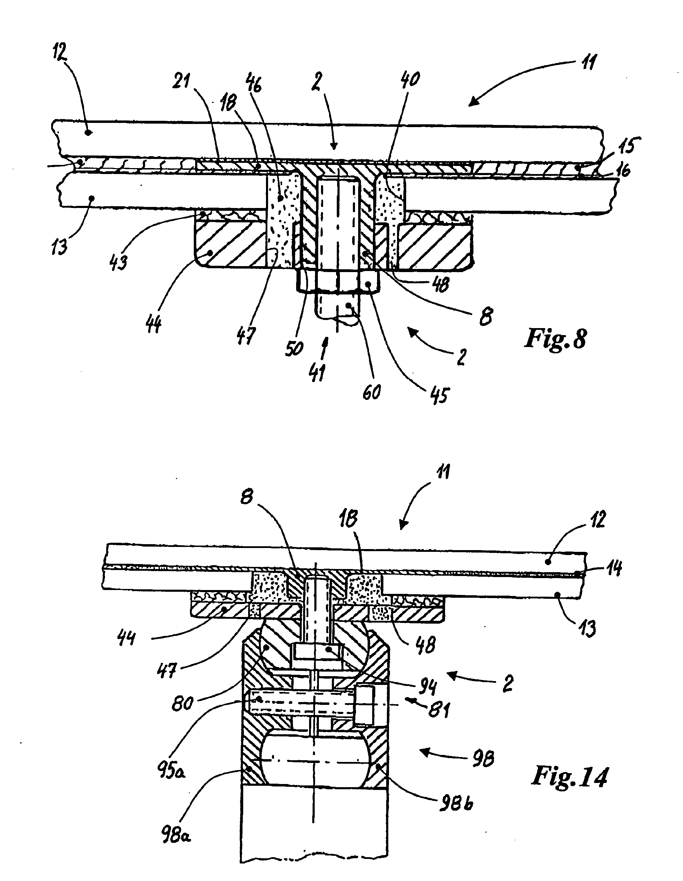

Fig. 8 zeigt schematisch einen Teil des Verbundelements 11 mit einem Befestigungselement 2, das im Unterschied zur Fig. 6 einen Zapfen 8 ohne ein Außengewinde hat. Die Abdeckscheibe 44 wird dabei als Rosette aufgesetzt und mittels einer Mutter 45 befestigt.

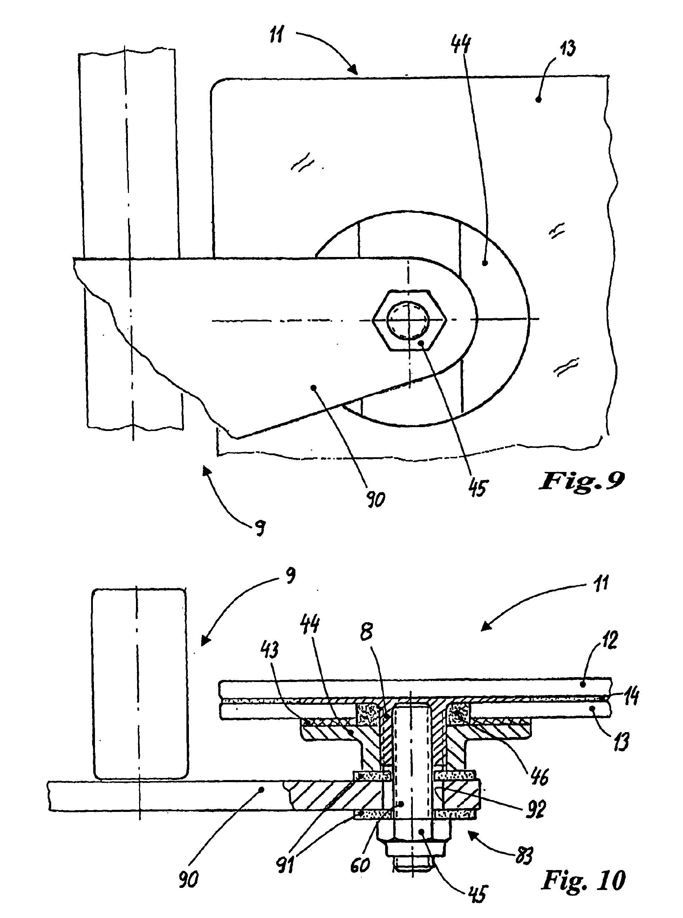

Fig. 9 und 10 zeigen einen Teil eines Verbundelements 11 mit einem Befestigungselement 2, das als Teil eines Loslagers zur Anbindung einer Tragstruktur 9 gestaltet ist. Zu diesem Zweck ist die Abdeckscheibe 44 als eine Hülse mit einem im Wesentlichen T-förmigen Längsschnitt ausgebildet. Die Abdeckscheibe 44 dient dabei als Anschlagsfläche für ein Gleitelement 91 eines Gleitelementenpaares, das eine parallel zur Ebene des Verbundelementes verschiebbare Lagerung 83 bildet. Die Gleitelemente 91 sind beispielsweise Ringscheiben aus Polyamid. Zwischen den Gleitelementen 91 ist ein Bauteil 90, wie ein Tragarm, der Tragstruktur 9 verschiebbar gelagert. Das Bauteil 90 weist hierfür eine Aussparung 92 auf, die in der Richtung, in der eine Verschiebung, z.B. zum Ausgleich von Wärmedehnungen, stattfinden kann, größer ist als der Durchmesser des Funktionselements 41. Die Abdeckscheibe 44 ist über ein Innengewinde mit dem Zapfen 8 verbunden. Die Gleitelemente 91 und das Bauteil 90 sind über eine Mutter 45 in Axialrichtung gesichert.

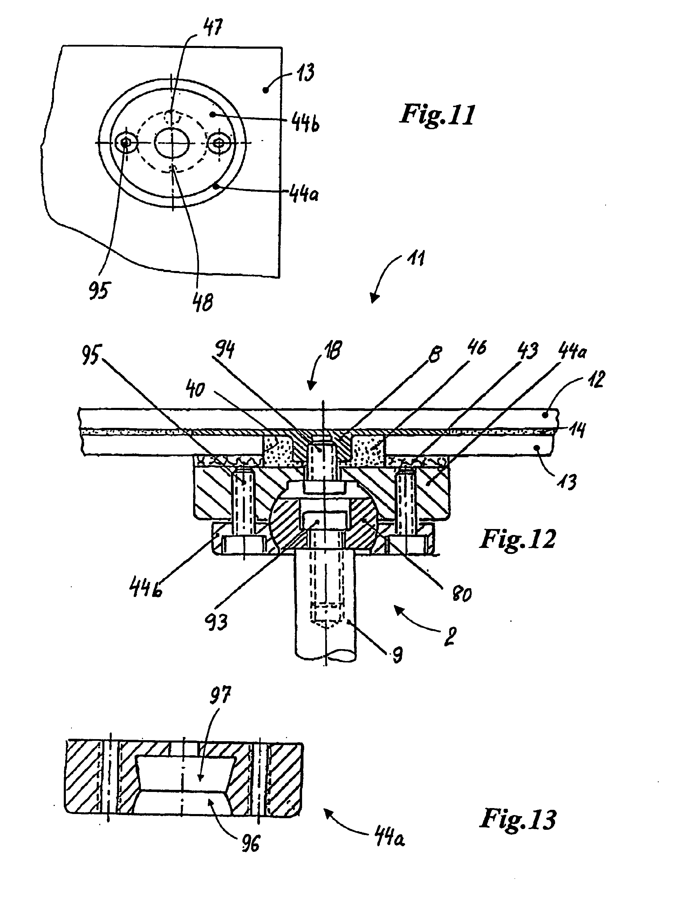

Fig. 11 und 12 zeigen ein Teil eines Verbundelementes 11 mit einem Befestigungselement 2 für eine bewegliche oder schwimmende Anbindung an einer nur schematisch angedeuteten Tragstruktur 9. Es enthält eine geteilte Abdeckscheibe 44a, 44b, zwischen denen eine Kugel 80 eingeschlossen ist, und so eine Schwenklagerung in Form eines Kugelgelenks 81 bilden. Die Tragstruktur 9 ist mit der Kugel 80 über eine Schraubverbindung 93 verbunden. Die Abdeckscheibe 44a ist über eine Schraubenverbindung 94 mit dem Zapfen 8 der Einlage 18 verbunden. Die Abdeckscheiben 44a, 44b sind über zwei Gewindeschrauben 95 verbunden und schließen so die Kugel in der Kalotte allseitig schwenkbar ein. Wie in Fig. 7 durch gestrichelte Linien angedeutet, sind in dem ersten Deckel 405a vorzugsweise Öffnungen 51, 52 zum Einfüllen der Vergussmasse 7 vorgesehen. Eine solche schwenkbare Befestigung ist bei der Anbringung von großen und schweren Glasflächen z.B. in horizontaler Lage, wie im Überkopfbereich, vorteilhaft. Obwohl die Verbundelemente durch ihren Sandwich-Aufbau recht biegesteif sind, können bei solchem Einsatz Durchbiegungen, ein Durchhängen in der Mitte, auftreten. Dem kann die Schwenklagerung nachgeben, ohne unzulässige Spannungen im Befestigungsbereich auf das Verbundelement aufzubringen.

Fig. 13 zeigt eine alternative Ausführungsform einer Abdeckscheibe 44a für ein Befestigungselement 2 gemäß Fig. 11 und 12. Sie weist einen kugelsegmentförmigen Kalotten-Abschnitt 96 für die Kugel 80 sowie eine weitere Ausnehmung 97 für beispielsweise für einen Schraubenkopf einer Schraube 94 auf.

Fig. 14 zeigt eine Variante einer schwenkbaren Lagerung für eine weitere bewegliche oder schwimmende Anbindung an eine Tragstruktur mittels einer Doppel-Kalottenklemme 98. An der Deckscheibe 13 ist dabei eine Abdeckscheibe 44 und eine Kugel 80 mittels einer Schraube 94 angebracht. Die Kugel 80 und eine nicht dargestellte Kugel an der Tragstruktur 9 wird durch zwei Teile 98a, 98b der Doppel-Kalottenklemme 98 aufgenommen, welche über eine Schraube 95a miteinander verspannt werden.

Durch die Kugelkalotten-Lagerung ist eine verschwenkbare Anbindung mit einem Schwenkwinkel von ca. 3 bis 4° erzielbar. Dadurch kann sich das Verbundelement 11 unter einer Streckenlast durchbiegen. Streckenlasten können außer durch Eigengewicht auch aufgrund von Schneemassen, Begehung oder ähnlichem auftreten, wenn das Verbundelement 11 beispielsweise Teil eines Dachs oder Vordachs im Außenbereich bildet.

## Patentansprüche

1. Verfahren zur Herstellung einer Befestigung eines Verbundelementes (11), das eine aus Glas bestehende Basisscheibe (12) und eine Deckscheibe (13) umfasst, wobei Basisscheibe (12) und Deckscheibe (13) mittels einer Zwischenschicht (14) zusammengefügt sind, mit wenigstens einem Befestigungselement (2), das eine zwischen den Scheiben eingeschlossene Befestigungs-Einlage (18) aufweist, **dadurch gekennzeichnet, dass** zuerst die Befestigungs-Einlage (18) mittels eines Klebers (21) auf die Basisscheibe (12) geklebt wird und danach die Zwischenschicht (14) und die Deckscheibe (13) aufgebracht werden, wobei die Befestigungs-Einlage (18) im Bereich eines Durchbruchs (40,49) wenigstens einer der Scheiben (12, 13) aufgebracht wird, wobei die Befestigungs-Einlage (18) einseitig mit der Basisscheibe (12) durch eine aushärtbare Kleberschicht verbunden ist.

2. Verfahren nach Anspruch 1, **dadurch gekennzeichnet, dass** die Zwischenschicht (14) in Form wenigstens einer thermoplastischen Folienbahn (15, 16) auf die bereits mit der Befestigungs-Einlage (18) verklebte Basisscheibe (12) aufgebracht und nach Überdeckung mit der Deckscheibe (13) durch Erwärmung und Druckaufbringung auf die Scheiben(12, 13), jedoch insbesondere unter Unterdruck zu einer beide Scheiben (12, 13) zu dem Verbundelement (11) verbindenden Schicht geformt wird.

3. Verfahren nach einem der vorhergehenden Ansprüche, **dadurch gekennzeichnet, dass** die Verklebung mittels eines durch Licht, insbesondere ultraviolettes Licht, aushärtbaren Klebers auf Akrylatbasis erfolgt.

4. Verfahren nach einem der vorhergehenden Ansprüche, **dadurch gekennzeichnet, dass** wenigstens eine Zwischenschicht zumindest teilweise auch über die Befestigungs-Einlage (18) gelegt wird.

5. Verfahren nach einen der vorhergehenden Ansprüche, **dadurch gekennzeichnet, dass** der Durchbruch (40) mit einer Vergussmasse (46) ausgefüllt wird.

6. Verfahren nach einem der vorhergehenden Ansprüche, **dadurch gekennzeichnet, dass** die Zwischenschicht (14) aus mehreren Folienbahnen (15, 16) besteht und wenigstens eine der Folienbahnen (15) im Bereich der Befestigungs-Einlage (18) eine Aussparung (19) aufweist.

7. Verfahren nach einem der vorhergehenden Ansprüche mit folgenden Schritten:
- Aufkleben der Befestigungs-Einlage (18) auf die Basisscheibe (12) mittels des Klebers;
- Aushärten des Klebers, insbesondere durch ultraviolettes Licht durch die Basisscheibe hindurch;
- Einbringen der Zwischenschicht (14) zwischen Basisscheibe (12) und Deckscheibe (13) unter zumindest teilweiser Überdeckung der Befestigungs-Einlage (18);
- Einbringen des so zusammengefügten Verbundelementes (11) in einen evakuierbaren Raum (30), insbesondere einen flexiblen Sack (25);
- Anlegen eines relativen Unterdrucks an den Raum, wobei wenigstens ein Teil des Raumes (30) unter einem von diesem relativen Unterdruck bedingten Pressdruck auf das Verbundelement (11) gepresst wird und dieses zusammenpresst, sowie
- Einstellen einer Behandlungstemperatur derart, dass in Kombination mit dem Pressdruck die Schicht (14) die Befestigungs-Einlage (18) unter Vermeidung der Bildung von Gaseinschlüssen teilweise umfließt.

8. Verbundelement mit wenigstens einer metallischen oder bezüglich ihrer Festigkeits-Eigenschaften metallartigen Befestigungs-Einlage (18), wobei das Verbundelement eine aus Glas bestehende Basisscheibe (12) und eine Deckscheibe (13) aufweist, die mittels einer Zwischenschicht (14) zusammengefügt sind, und wobei die wenigstens eine Befestigungs-Einlage (18) zwischen den Scheiben (12, 13) eingeschlossen ist, wobei die Befestigungs-Einlage (18) mit der Basisscheibe (12) mittels eines Klebers verklebt ist und die Zwischenschicht (14) oder mindestens eine Lage einer mehrlagigen Zwischenschicht die Befestigungs-Einlage (18) zumindest auf einer der Deckscheibe (14) zugewandten Seite überdeckt und mit dieser verbunden ist, wobei die Basisscheibe (12) zumindest in einem Bereich der eingebetteten Befestigungs-Einlage (18) eine durchbruchsfreie Oberfläche aufweist und die Deckscheibe (13) in dem korrespondierenden Bereich mit einem Durchbruch (40) gestaltet ist, durch welchen ein an der Befestigungs-Einlage (18) anbringbares, von einer Planfläche des Verbundelements (11) im angebrachten Zustand abragendes bzw. zugängliches Funktionselement (41) führbar ist, wobei die Befestigungs-Einlage (18) und die Deckscheibe (13) sich am Randbereich des Durchbruchs (40) zumindest teilweise überlappen, wobei die Zwischenschicht (14) oder mindestens eine Lage einer mehrlagigen Zwischenschicht die Befestigungs-Einlage (18) zumindest auf einer der Deckscheibe (14) zugewandten Seite überdeckt und mit dieser verbunden ist, **dadurch gekennzeichnet, dass** die Befestigungs-Einlage (18) einseitig mit der Basisscheibe (12) durch eine aushärtbare Kleberschicht verbunden ist.

9. Verbundelement nach Anspruch 8, **dadurch gekennzeichnet, dass** der Kleber ein mittels Licht, insbesondere UV-Licht, aushärtbarer Kleber auf Akrylatbasis ist, der vorzugsweise eine thermische Beständigkeit bis 120°C, insbesondere kurzzeitig bis 150°C, hat.

10. Verbundelement nach Anspruch 8 oder 9, **dadurch gekennzeichnet, dass** die metallische Befestigungs-Einlage (18) eine Dicke von 0,5 bis 1,5mm, vorzugsweise ca. 1 mm, die Kleberschicht eine Dicke von 0,1 bis 0,3mm, vorzugsweise ca. 0,2mm, und die Zwischenschicht (14) im von Befestigungs-Einlagen (18) freien Bereich eine Dicke von 1,5 bis 3mm, insbesondere ca. 2mm, aufweist.

11. Verbundelement nach einem der Ansprüche 8 bis 10, **dadurch gekennzeichnet, dass** die Befestigungs-Einlage (18) an der Seite, welche der Deckscheibe (13) zugewandt ist, einen abragenden Zapfen (8) aufweist, wobei das Funktionselement (41) mit dem Zapfen (8) verbindbar, insbesondere verschraubbar ist oder das vorzugsweise als Gewindebolzen oder als Gewindeschraube ausgebildete Funktionselement (41) dauerhaft an der Befestigungs-Einlage (18) befestigt ist, insbesondere mit der Befestigungs-Einlage verschweißt und/oder verklebt ist.

12. Verbundelement nach einem der Ansprüche 8 bis 11, **dadurch gekennzeichnet, dass** auf die Deckscheibe (13) im Bereich des Durchbruchs (40) eine Abdeckscheibe (44) aufgesetzt ist und ggf. zwischen der Abdeckscheibe (44) und der Deckscheibe (13) eine Dichtungsschicht (43) vorgesehen ist, wobei vorzugsweise die Abdeckscheibe (44) mindestens eine Öffnung (47, 48) aufweist.

13. Verbundelement nach einem der Ansprüche 8 bis 12, **dadurch gekennzeichnet, dass** eine Vergussmasse (46) in den Hohlraum zwischen dem Funktionselement (41) bzw. zwischen dem Zapfen (8) und dem Durchbruch (40) gefüllt ist, wobei vorzugsweise die Vergussmasse (46) durch die Öffnung (47) gemäß Anspruch 13 eingefüllt ist.

14. Verbundelement nach einem der Ansprüche 8 bis 13, **dadurch gekennzeichnet, dass** das Funktionselement (41) und/oder eine mit ihm zusammenwirkende Abdeckscheibe (44) als Teil einer schwenkbaren oder in wenigstens einer Richtung verschiebbaren Lagerung (81, 83) zur Anbringung an einer Tragstruktur (90) gestaltet ist, wie einem Kugelgelenk oder einer Schiebelagerung.

## Claims

1. Method for the production of an attachment of a composite element (11) having a base pane (12) made of glass and a cover pane (13), wherein the base pane(12) and the cover pane (13) are joined by means of an intermediate layer (14), with at least one fixing element (2) that includes an attachment insert (18) included between the panes, **characterized in that** the attachment insert (18) is initially glued onto the base pane (12) by means of an adhesive (21) and thereafter the intermediate layer (14) and the cover pane (13) are applied, wherein the attachment insert (18) is applied in the region of an aperture (40, 49) of at least one of the panes (12, 13), wherein the attachment insert (18) is connected on one side to the base pane (12) by means of a curable adhesive layer.

2. Method according to claim 1, **characterized in that** the intermediate layer (14) is applied to the base pane (12) already glued to the attachment insert (18), in the form of at least one length of a thermoplastic film (15, 16) and is formed into a layer connecting both panes (12, 13) to form the composite element (11), after being covered with the cover pane (13) by heating and by applying pressure, particularly negative pressure, on the panes (12,13).

3. Method according to one of the preceding claims, **characterized in that** bonding takes place by means of an adhesive on an acrylate base which is curable by light, particularly ultraviolet light.

4. Method according to one of the preceding claims, **characterized in that** at least one intermediate layer is also placed over the attachment insert (18), at least partially.

5. Method according to one of the preceding claims, **characterized in that** the aperture (40) is filled with a casting compound (46).

6. Method according to one of the preceding claims, **characterized in that** the intermediate layer (14) consists of several lengths of film (15, 16) and that at least one of the lengths of film (15) includes a recess (19) in the region of the attachment insert (18).

7. Method according to one of the preceding claims, comprising the following steps:
- gluing the attachment insert (18) onto the base pane (12) by means of an adhesive;
- allowing the adhesive to cure, particularly by ultraviolet light through the base pane;
- inserting the intermediate layer (14) between the base pane (12) and the cover pane (13) while overlapping the attachment insert (18), at least partially;
- inserting the composite element (11) thus joined in a space (30) that can be evacuated, particularly a flexible bag (25);
- applying a relative negative pressure to the space, wherein at least a part of the space (30) is pressed onto the composite element (11) and compresses the same under a pressing pressure that is caused by said relative negative pressure; and
- setting a treatment temperature so that in combination with the pressing pressure, said layer (14) partially flows around the attachment insert (18) while avoiding the formation of gas bubbles.

8. Composite element, comprising a metallic or, with regard to its strength properties, a metal-like attachment insert (18), wherein the composite element comprises a base pane (12) made of glass and a cover pane (13) that are joined together by means of an intermediate layer (14), and wherein the at least one attachment insert (18) is included between the panes (12, 13), wherein the attachment insert (18) is glued to the base pane (12) by means of an adhesive, and the intermediate layer (14) or at least one part of a multipart intermediate layer covers the attachment insert (18) at least on a side facing the cover pane (14) and is connected to the same, wherein the base pane (12) has a surface without an aperture at least in a region of the embedded attachment insert (18), and the cover pane (13) is configured in a corresponding region with an aperture (40) through which a functional element (41) can be guided that can be fixed to the attachment insert (18) and in the fixed state protrudes and is accessible from a plane surface of the composite element (11), wherein the attachment insert (18) and the cover pane (13) overlap each other in the rim area of the aperture, at least partially, wherein the intermediate layer (14) or at least one part of the multipart intermediate layer covers the attachment insert (18) at least on a side facing the cover pane (14) and is connected to the same, **characterized in that** the attachment insert (18) is connected to the base pane (12) by means of a curable adhesive layer.

9. Composite element according to claim 8, **characterized in that** the adhesive is one based on acrylate which is curable by light, in particular ultraviolet light, and preferably has a thermal resistance of up to 120°, particularly of up to temporarily 150°C.

10. Composite element according to claim 8 or 9, **characterized in that** the metallic attachment insert (18) has a thickness of 0.5 to 1.5 mm, preferably of 1 mm, the adhesive layer has a thickness of 0.1 mm to 0.3 mm, preferably of 0.2 mm, and the intermediate layer (14) in the region free of attachment inserts (18) has a thickness of 1.5 to 3 mm, in particular of 2 mm.

11. Composite element according to one of the claims 8 to 10, **characterized in that** the attachment insert (18) includes on the side facing the cover pane (13) a projecting pin (8), wherein the functional element (41) can be connected to the pin (8), particularly by screwing, or the functional element (41) that is preferably constructed as a threaded bolt or as a threaded screw is permanently fixed to the attachment insert (18), particularly by welding and/or bonding.

12. Composite element according to one of the claims 8 to 11, **characterized in that** on the cover pane (13) in the region of the aperture (40) a protecting pane (44) is attached and, where necessary, a sealing layer (43) is provided between the protecting pane (44) and the cover pane (13), wherein the protecting pane (44) has at least one opening (47, 48).

13. Composite element according to one of the claims 8 to 12, **characterized in that** a casting compound (46) is filled into the cavity between the functional element (41) or between the pin (8) and the aperture (40), wherein the casting compound (46) is preferably filled in through the opening according to claim 13.

14. Composite element according to one of the claims 8 to 13, **characterized in that** the functional element (41) and/or a protecting pane (44) cooperating with it is configured as a part of a bearing structure (81, 83) that can be pivoted or at least moved in one direction, for attaching a supporting structure (90) such as a ball joint or a sliding bearing.

## Revendications

1. Procédé pour la fabrication d'une fixation d'un élément stratifié (11) comprenant une plaque de base (12) en verre et une plaque de recouvrement (13), la plaque de base (12) et la plaque de recouvrement (13) étant connectées au moyen d'une couche intermédiaire (14), avec au moins un élément de fixation (2) comprenant un insert de fixation (18) enfermé entre les plaques, **caractérisé en ce qu'**on colle d'abord l'insert de fixation (18) au moyen d'un adhésif (21) sur la plaque de base (12) et on applique après la couche intermédiaire (14) et la couche de recouvrement (13), l'insert de fixation (18) étant appliqué dans la zone d'une ouverture (40, 49) d'au moins une des plaques (12, 13), l'insert de fixation (18) étant connecté d'un côté à la plaque de base (12) au moyen d'une couche adhésive durcissable.

2. Procédé selon la revendication 1, **caractérisé en ce que** la couche intermédiaire (14) est appliquée sur la plaque de base (12), qui est déjà collée sur l'insert de fixation (18), sous la forme d'au moins une bande de feuilles (15, 16) thermoplastique et, après le recouvrement avec la plaque de recouvrement (13) par chauffage et par l'application d'une pression sur le plaques (12, 13), mais en particulier sous vide, est moulée pour former une couche connectant les deux plaques (12, 13) de sorte qu'on obtient l'élément stratifié.

3. Procédé selon l'une des revendications précédentes, **caractérisé en ce que** le collage se fait au moyen d'un adhésif à base d'acrylique durcissable à la lumière, en particulier à la lumière ultraviolette.

4. Procédé selon l'une des revendications précédentes, **caractérisé en ce qu'**au moins une couche intermédiaire est aussi placée sur l'insert de fixation (18), au moins en partie.

5. Procédé selon l'une des revendications précédentes, **caractérisé en ce que** l'ouverture (40) est remplie d'une masse de coulage (46).

6. Procédé selon l'une des revendications précédentes, **caractérisé en ce que** la couche intermédiaire (14) consiste en plusieurs bandes de feuilles (15, 16) et que l'une au moins des bandes de feuilles (15) présente un évidement (19) dans la zone de l'insert de fixation (18).

7. Procédé selon l'une des revendications précédentes, comprenant les étapes suivantes :
- coller l'insert de fixation (18) sur la plaque de base (12) au moyen de l'adhésif ;
- faire durcir l'adhésif, en particulier à la lumière ultraviolette au travers de la plaque de base ;
- apporter la couche intermédiaire (14) entre la plaque de base (12) et la plaque de recouvrement (13) en chevauchant l'insert de fixation (18) ;
- apporter l'élément stratifié (11) si composé dans une espace à vide (30), en particulier dans un sac flexible (25) ;
- mise sous vide partiel relatif de l'espace, au moins une partie de l'espace (30) étant pressée sur l'élément stratifié et le compressant, sous une pression de pressage causée par le vide partiel relatif, et
- régler une température de traitement de sorte que, en combinaison avec la pression de pressage, la couche (14) partiellement coule autour de l'insert de fixation (18) sous l'évitement de bulles de gaz.

8. Élément stratifié comprenant au moins un insert de fixation (18) métallique ou en métal en ce qui concerne ses propriétés de stabilité, l'élément stratifié comprenant une plaque de base (12) en verre et une plaque de recouvrement (13) qui sont connectées au moyen d'une couche intermédiaire (14), l'au moins un insert de fixation (18) étant enfermé entre les plaques (12, 13), l'insert de fixation (18) étant collé au moyen d'un adhésif (21) sur la plaque de base (12), et la couche intermédiaire (14) ou au moins une épaisseur d'une couche intermédiaire à plusieurs épaisseurs recouvrant l'insert de fixation (18) au moins à un côté tourné vers la plaque de recouvrement (14) et étant connectée avec cette plaque, la plaque de base (12) présentant une surface sans ouverture au moins dans une zone de l'insert de fixation (18) encastré, et la plaque de recouvrement (13) étant configurée avec une ouverture (40) dans la zone correspondante, par ladite ouverture pouvant être passé un élément fonctionnel (41) qui peut être fixé au l'insert de fixation (18) et qui fait saillie sur ou est accessible d'une surface plane de l'élément stratifié (11) en l'état monté, l'insert de fixation (18) et la plaque de recouvrement (13) se chevauchant dans la zone de bord de l'ouverture (40), la couche intermédiaire (40) ou au moins une épaisseur d'une couche intermédiaire à plusieurs épaisseurs recouvrant l'insert de fixation (18) au moins à un côté tourné vers la plaque de recouvrement (14) et étant connectée avec cette plaque, **caractérisé en ce que** l'insert de fixation (18) est connecté à un côté à la plaque de base (12) au moyen d'un couche adhésive durcissable.

9. Élément stratifié selon la revendication 8, **caractérisé en ce que** l'adhésif est un adhésif à base d'acrylique durcissable à la lumière, en particulier à la lumière ultraviolette, l'adhésif ayant de préférence une résistance thermique jusqu'à 120°C, en particulier temporellement jusqu'à 150°C.

10. Élément stratifié selon les revendications 8 ou 9, **caractérisé en ce que** l'insert de fixation (18) métallique présente une épaisseur de 0,5 à 1,5 mm, de préférence d'environ 1 mm, la couche d'adhésif présente une épaisseur de 0,1 à 0,3 mm, de préférence d'environ 0,2 mm, et la couche intermédiaire (14) présente dans la zone sans l'insert de fixation (18) une épaisseur de 1,5 à 3 mm, en particulier d'environ 2 mm.

11. Élément stratifié selon l'une des revendications 8 à 10, **caractérisé en ce qu'**au côté tourné vers la plaque de recouvrement, l'insert de fixation (18) présente un bouchon saillant (8), l'élément fonctionnel (41) pouvant être connecté et en particulier vissé au bouchon (8), ou l'élément fonctionnel (41) qui est configuré de préférence comme un bouchon fileté ou comme un vis fileté, étant fixé de manière durable à l'insert de fixation (18), en particulier par soudage et/ou collage.

12. Élément stratifié selon l'une des revendications 8 à 11, **caractérisé en ce que** sur la plaque de recouvrement (13), dans la zone de l'ouverture (40), est placée une plaque de protection (44), et le cas échéant une couche d'étanchéité (43) est prévue entre la plaque de protection (44) et la plaque de recouvrement (13), la plaque de protection présentant de préférence au moins un orifice (47, 48).

13. Élément stratifié selon l'une des revendications 8 à 12, **caractérisé en ce que** la cavité entre l'élément fonctionnel (41) respectivement entre le bouchon (8) et l'ouverture (40) est remplie d'une masse de coulage (46), la masse de coulage (46) étant versée au travers l'orifice (47) selon la revendication 13.

14. Élément stratifié selon l'une des revendications 8 à 12, **caractérisé en ce que** l'élément fonctionnel (41) et/ou une plaque de protection (44) coopérant avec lui, est configuré comme une partie d'un logement (81, 83) à pivotement ou mobile dans au moins une direction et destiné pour être fixé à une structure porteuse (90) comme un joint sphérique ou un logement coulissant.
